(19) Europäisches Patentamt
European Patent Office
Office européen des brevets

(11) **EP 1 583 256 B1**

(12) **EUROPEAN PATENT SPECIFICATION**

(45) Date of publication and mention
of the grant of the patent:
**21.10.2015 Bulletin 2015/43**

(21) Application number: **03750254.9**

(22) Date of filing: **19.09.2003**

(51) Int Cl.:
*H04W 52/12* (2009.01)   *H04B 7/005* (2006.01)
*H04W 52/20* (2009.01)   *H04W 52/22* (2009.01)
*H04W 52/14* (2009.01)   *H04W 52/24* (2009.01)

(86) International application number:
**PCT/CN2003/000796**

(87) International publication number:
**WO 2004/059872 (15.07.2004 Gazette 2004/29)**

(54) **A POWER CONTROL METHOD IN A WCDMA MOBILE COMMUNICATION SYSTEM**

VERFAHREN ZUR LEISTUNGSREGELUNG IN EINEM MOBILEN WCDMA-
KOMMUNIKATIONSSYSTEM

PROCEDE DE REGULATION DE PUISSANCE DANS UN SYSTEME DE COMMUNICATION MOBILE
AMRC LARGE BANDE

(84) Designated Contracting States:
**AT BE BG CH CY CZ DE DK EE ES FI FR GB GR
HU IE IT LI LU MC NL PT SE SI SK TR**

(30) Priority: **31.12.2002   CN 02139929**

(43) Date of publication of application:
**05.10.2005   Bulletin 2005/40**

(73) Proprietor: **ZTE Corporation
Shenzhen 518057 (CN)**

(72) Inventors:
- **KE, Yazhu,
ZTE Plaza
Shenzhen,
Guangdong 518057 (CN)**
- **DOU, Jianwu,
ZTE Plaza
Shenzhen,
Guangdong 518057 (CN)**
- **XU, Bin,
ZTE Plaza
Shenzhen,
Guangdong 518057 (CN)**

(74) Representative: **Beetz & Partner mbB
Patentanwälte
Steinsdorfstraße 10
80538 München (DE)**

(56) References cited:
EP-A1- 1 209 824    EP-A1- 1 267 500
WO-A1-00/65748    WO-A1-01/78250
WO-A1-02/058278    CN-A- 1 357 178
CN-A- 1 373 940

**Description**

**Field of The Invention**

The present invention relates to WCDMA mobile communication technologies, and more particularly, to a method for uplink power controlling in a WCDMA mobile communication system.

**Background of The Invention**

The uplink of the WCDMA system is interference limited. For a certain User Equipment (UE) in the system, the transmitting power of other UE is its interference. Some UE locate near to the base station and some locate far away from the base station due to the random distribution of the UEs in an area. Therefore, the SIR of a remote UE received by the base station is very weak, which results in great bit error and Near-Far Effect, in case that the same transmitting power is employed for all UEs. Furthermore, the mobile users are usually affected by Doppler Shift and Rayleigh Fading of the wireless link which is of wide and dynamic frequency range. In these cases, it requires prompt and accurate power control for the uplink of the WCDMA system to guarantee Quality of Service (QoS) for the users.
Performing an uplink Inner Loop Power Control can adjust the transmitting power of each UE and decrease the influence of Near-Far Effect to ensure that the power of each UE received by the base station is equal and to make up the effect of Doppler Shift and Rayleigh Fading, so that each user meets the QoS of transmitting service. An Inner Loop Power Control method is presented in 3GPP TS 25.214: for the uplink, the base station measures Signal to Interference Ratio (SIR = $E_b/N_0$) for each received wireless link and then compares the received SIR with the Signal to Interference Ratio target ($SIR_{target}$) the service need to meet. If the SIR>=$SIR_{target}$, a transmitting power control instruction with the bit value of 1 is sent to the UE in the downlink control channel; if SIR<$SIR_{target}$, a transmitting power control instruction with the bit value of 0 is sent to the UE in the downlink control channel. The UE increases or decreases the transmitting power according to the received transmitting power control instruction and power control algorithm specified by the network layer. However, along with the variation of the mobile communication environment and the moving speed, the $SIR_{target}$ need to be varied as well. And the initially assigned value of uplink $SIR_{target}$, specified by the network, might be of a great difference with the actual $SIR_{target}$ value. In this case, transmitting power control, performed according to the initially assigned $SIR_{target}$ in this circumstance, will not be accurate. Thus the $SIR_{target}$ value should be adjusted in accordance with the service quality while performing Inner Loop Power Control. And this can be achieved by Outer Loop Power Control, i.e., Outer Loop Power Control is the assistant of Inner Loop Power Control, and the basis to adjust the transmitting power by Inner Loop Power Control method.
It is considered that the real time channel characteristics cannot be reflected completely due to the delay caused by the loop, which is a result of fast variation of wireless channel fading in urban environment in Chinese patent application No. CN1270459A "Improving Channel Adaptive Fast Power Control in CDMA". So different Inner Loop Power Control algorithms will be adopted according to different communication environments (urban area, suburban area or countryside) to perform Inner Loop Power Control, and achieved in hardware. Although the above patent considers the problem that channel characteristics cannot be tracked in time due to the loop delay and solves this problem by selecting different Inner Loop Power Control algorithms which take $SIR_{target}$ as the benchmark, the required $SIR_{target}$ will also be varied to meet the service quality if the UE speed or other communication environments vary. Thus, it is not enough to only select different Inner Loop Power Control methods to overcome channel fading. When the user's moving speed is promoted very quickly, the $SIR_{target}$ required by the service will increase. Thus non-adjusting the $SIR_{target}$ will result in bad communication quality and call failure. As for the situation that the user's moving speed varies from a high speed to a low speed, the $SIR_{target}$ required by the service will decrease, and the user's transmitting power will be greater than the required transmitting power which will increase the interference among users and finally influences the uplink capacity of the cell.
The document WO00/65748A1 discloses a transmission power control method and system for use in a spread spectrum or CDMA mobile communications system, whereby an estimate of the achieved SIR is used as an additional parameter for the outer power control loop function. When the QoS and achieved SIR are both too low, the QoS is ignored and the SIR target value is instead controlled by the achieved SIR. Similarly, when both the QoS and achieved SIR are too high, the QoS is ignored and the SIR target value is instead controlled by the achieved SIR.
Generally speaking, the existing power control methods cannot adjust the $SIR_{target}$ adaptively according to actual communication, which leads to failure of accurate transmitting power control.

**Summary of The Invention**

What is needed of the present invention is to provide a method for power controlling in a WCDMA mobile communication system. The adjusting period of $SIR_{target}$ can be determined according to the QoS level met by different service, and the SIR$_{target}$ is adaptively adjusted according to the current actual communication quality to ensure the transmitting power of all kinds of services under all kinds of environments can be converged rapidly.

The theme of the method for power controlling of the present invention is: the base station measures the SIR of each wireless link, compares it with the SIR$_{target}$ set according to QoS requirements, controls the SIR of each link converging to the SIR$_{target}$ and also adjusts the SIR$_{target}$ according to the quality information obtained by the measurements so that the service quality will not vary with the variation of wireless environments and the communication quality will maintain relatively stable.

The present invention provides a method for power controlling in a WCDMA mobile communication system, wherein it includes the steps of: determining user's initial transmitting power and initial uplink SIR$_{target}$; starting Close Loop Power Control including Inner Loop Power Control and performing normal Outer Loop Power Control; measuring SIR of each wireless uplink; judging whether a link SIR$_{error}$ exceeds an error threshold; wherein the link SIR$_{error}$ is the difference between an SIR measured at the current time and an average value of the SIR$_{target}$ in a certain period; keeping on the normal Outer Loop Power Control if the SIR$_{error}$ does not exceed the error threshold; and if the SIR$_{error}$ exceeds the error threshold, pausing the normal Outer Loop Power Control and triggering a High Priority Outer Loop Power Control for converging the SIR$_{target}$ more rapidly to a value satisfying service quality requirement; performing the High Priority Outer Loop Power Control, and returning a performance result; keeping on the normal Outer Loop Power Control after finishing the High Priority Outer Loop Power Control.

The present invention rapidly adjusts the SIR$_{target}$ according to the link SIR$_{error}$, normal Outer Loop Power Control should be performed when the link SIR$_{error}$ does not exceed the threshold, and a High Priority Outer Loop Power Control will be adopted when the link SIR$_{error}$ exceeds the threshold; it ensures the rapid convergence of power control by two-level Outer Loop Power Control; the High Priority Outer Loop Power Control will be adopted when the difference between the assigned SIR$_{target}$ and the actually measured SIR is big so that the transmit service can rapidly meet the service quality requirement; slightly adjust the SIR$_{target}$ by using threshold report cyclic check when the difference between the assigned SIR$_{target}$ and the actually measured SIR is small to ensure rapid and accurate convergence of the actual SIR, which substantially makes the communication quality meet the service quality rapidly. The present invention also determines the adjusting period of SIR$_{target}$ according to different QoS levels met by different services, and the power control can be converged more rapidly by the method of adaptively adjusting step length according to the current actual communication quality status. The present invention considers the problem of power control convergence in the aspects of QoS level of the transmit service, mobile communication environment, real-time communication quality, etc., which has practical application value. Generally speaking, adopting the two-level Outer Loop Power Control method can guarantee the rapid convergence of user transmitting power to ensure the service quality of the transmission and improve the capacity of the system.

## Brief Description of The Drawings

Fig.1 is the general flow chart of the method for power controlling in WCDMA mobile communication system in accordance with the preferred embodiment of the present invention;
Fig.2 is the flow chart of normal Outer Loop Power Control in the present invention;
Fig.3 is the flow chart of High Priority Outer Loop Power Control in the present invention;
Fig.4 is the sketch map of practical application in WCDMA communication system in accordance with the present invention.

## Detailed Description of The Preferred Embodiments:

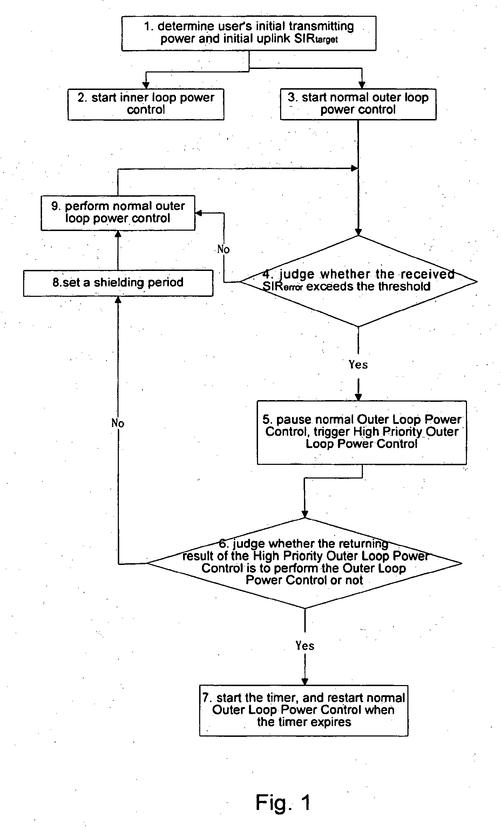

Now, the present invention will be described in details with reference to the attached figures and instances.
The basic principle of realizing two-level Outer Loop Power Control is: performing normal Outer Loop Power Control when threshold triggered measurement report is not received; starting uplink High Priority Outer Loop Power Control when the threshold triggered measurement report is received, and pausing the normal Outer Loop Power Control process; carrying on the normal Outer Loop Power Control after finishing the High Priority Outer Loop Power Control.
Since the loop delay needs 4-5 frames, i.e., the effect of upwardly adjusting SIR$_{target}$ can only be reflected after 4-5 frames, a shielding period is set before performing the normal Outer Loop Power Control and after upwardly adjusting the SIR$_{target}$, and in the shielding period, error blocks will not be counted for the normal Outer Loop Power Control process.
Normal Outer Loop Power Control can be performed when there is correspondence context between the user and node B in the WCDMA system. And during the period of normal Outer Loop Power Control, High Priority Outer Loop Power Control is started if the measurement report triggered according to the SIR$_{error}$ is received.
As shown in Fig. 1, the general steps of the method for power controlling in a WCDMA communication system includes: first, determining user's initial transmitting power and initial uplink $SIR_{target}$, starting Close Loop Power Control including Inner Loop Power Control, which is performed in node B, and normal Outer Loop Power Control, which is performed in Radio Network Controller (RNC) in WCDMA system. RNC performs normal Outer Loop Power Control for the uplink, and during the controlling process, if the measurement report triggered by the $SIR_{error}$ is received from node B, normal Outer Loop Power Control is paused, the High Priority Outer Loop Power Control is triggered and the performance result is returned to node B will act according to the performance result: if the performance result is not to perform the Outer Loop Power Control, a timer is started which functions to ensure the Inner Loop Power Control converging time, and when the timer expires, the RNC for normal Outer Loop Power Control is started; if the performance result is a new $SIR_{target}$ value, a shielding period is set to avoid loop delay so that cyclic check CRCI indication error occurring in the shielding period will not be processed when normal Outer Power Control is on, then normal Outer Loop Power Control is carried on by the RNC repeatedly.

In the present invention, the normal Outer Loop Power Control adopts a method of threshold report on cyclic check triggering. The principle is: continuously monitoring if there is Cyclic Redundancy Check (CRC) error, and counting error data block number within an allowance period assigned to error blocks. Upwardly adjusting the $SIR_{target}$ to a higher value when the error block number counted in the allowance period for error blocks exceeds error block threshold, wherein the allowance period for error blocks is a data transmission window for counting the error block number with the starting point being the first data block with CRC error monitored when the allowance period for error blocks is set as 0. Reset the allowance period for error blocks when the allowance period for error blocks expires. Because there are at least 4-5 frames loop delay, i.e., the upwardly adjusting effect can only be reflected after 4-5 frames. Therefore within 4-5 frames after the $SIR_{target}$ is upwardly adjusted, it need not to be readjusted if CRC indication error appears again, which is achieved by setting the shielding period; the CRC indication error occurring in the shielding period will not be counted, and adjust the $SIR_{target}$ only when the CRC indication error still exists after the shielding period expires. At the moment, adjusting step length should be increased because such a great probability of error appears in such a short time, so that the power control can be converged quickly to meet the requirement of service quality rapidly. The principle for downward adjustment is to downwardly adjust the $SIR_{target}$ when there is no CRC error in downward adjusting period. The determination of downward adjusting period reflects the requirements of service quality for different services. In the present invention, the downward adjusting period is determined according to $BLER_{target}$ (Block Error Ratio target) of different services, wherein the downward adjusting period is $M \times (1/BLER_{target})$, and M is an adjustable value ranging from 1 to 3. And the step length for downward adjusting will not be adjusted because it is initially assigned.

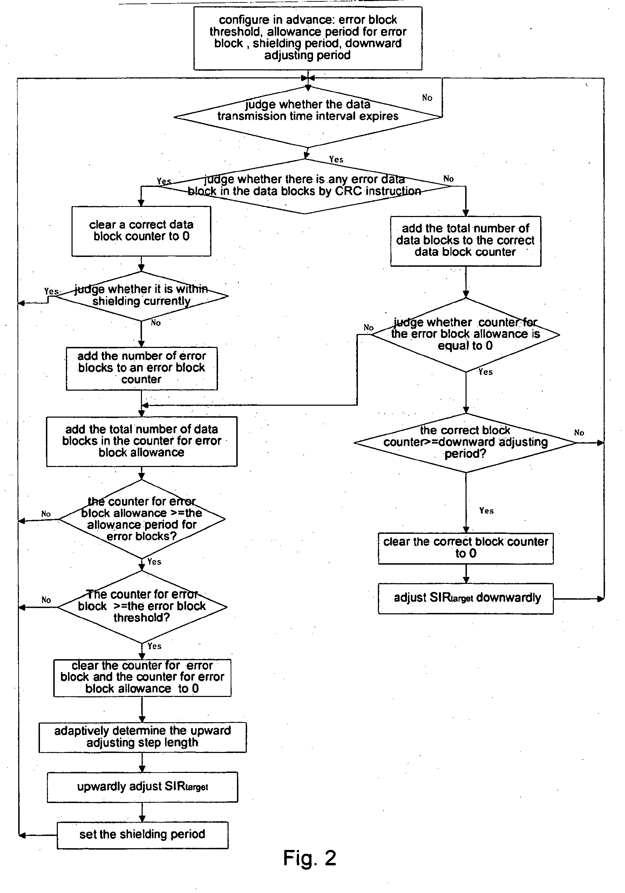

Fig.2 shows a detailed process of a normal Outer Loop Power Control. First of all, relative thresholds are configured in advance, such as error block threshold, allowance period for error blocks, shielding period and downward adjusting period. A receiver receives data every Transmission Timing Interval (TTI), so it should be performed every TTI to judge if the received data is correct. When data transmission interval expires, it needs to judge whether any data block with CRC indication error exists in the data blocks received in the TTI. Since several data blocks can be received in each TTI, it indicates that the data block is error if the CRC indication of any data block is 'error'. If there is an error data block among the received data blocks, a correct block counter needs to be cleared to 0, furthermore it needs to judge whether it is within the shielding period currently, i.e., whether the shielding period is set. If it is within the shielding period currently, it is not needed to deal with the error block number but returns to wait for the expiration of data transmission interval and repeats the above step. If it is not within shielding period currently, the error blocks should be counted received in the TTI, i.e., the number of error blocks received in the TTI is added to an error block counter as well as a total number of the data blocks received in the TTI to an error block allowance counter. Judge whether a value of the counter for error block allowance is greater than or equal to the allowance period for error blocks. If the value is less than the allowance period for error blocks, it needs to return to wait for the expiration of data transmission interval and repeat the above step. If the value of the counter for error block allowance is greater than or equal to the error allowance period, it needs to judge whether the value of the counter for error block is greater than or equal to the error block threshold, and if the value is less than the error block threshold, it needs to return to wait for the expiration of data transmission interval and repeat the above step. If the value of the counter for error block is greater than or equal to the error block threshold, which indicates that the current $SIR_{target}$ should be adjusted upwardly, the counter for error block and the counter for error block allowance should be cleared to 0 for the determination and adjustment of next round. Then the upward adjusting step length is determined, and the present invention employs a method of adaptively adjusting step length, i.e., the times of continuously upward adjusted $SIR_{target}$ are recorded, it is ensured that the upward adjusting step length is in direct proportion to the number of times of continuously upwardly adjusting $SIR_{target}$; the number of times of upwardly adjusting $SIR_{target}$ recorded previously is cleared when the $SIR_{target}$ is adjusted downwardly. The $SIR_{target}$ is adjusted Upwardly according to the upward adjusting step length, i.e., the adjusting step length is added to the current $SIR_{target}$ as the new $SIR_{target}$ and then the new $SIR_{target}$ is informed to node B. Finally a shielding period is set, i.e., a timer is set, the error block occurring in the shielding period will not be counted, and the shielding function will be stopped when the timer expires, then it needs to return to wait for the expiration of data transmission interval and repeat the above steps.

If there isn't any error data block in the received data blocks within one TTI, the total number of the data blocks received within the TTI is added to the correct data block counter. It needs to judge whether the current error block allowance counter is 0, if not, it needs to return to perform the step of adding the total number of the data blocks received within the TTI into the counter for error block allowance and the subsequent. If yes, it needs to judge whether the correct block counter is greater than or equal to the set downlink adjusting period. It needs to return to wait for the expiration of data transmission interval and repeat the above step if the counter is less than the downward adjusting period. Otherwise the correct block counter should be cleared to 0, the $SIR_{target}$ is adjusted downwardly according to the initially assigned adjusting step length, the new $SIR_{target}$ is informed to node B and it needs to return to wait for the expiration of data transmission interval and repeat the above step.

In actual communication, the SIR meeting the transmit service needs to be changed due to the variation of the mobile communication environment and the moving speed. In case of the link $SIR_{error}$ exceeding the error threshold, the High Priority Outer Loop Power Control is adopted in order to speed up the power control convergence.

3GPP TS 25.215 Protocol mentions that a link $SIR_{error}$ should be measured at UTRAN (UMTS Terrestrial Radio Access Network) side, and the $SIR_{error}$ is the difference between the SIR measured at the current time and $SIR_{target-ave}$, average of the $SIR_{target}$ in a certain period, i.e., $SIR_{error}=SIR-SIR_{target-ave}$, in which the average of $SIR_{target}$ in the period of 80ms is selected in this example. The $SIR_{error}$ is also closely related to power control. Outer Loop Power Control is adopted according to the value of $SIR_{error}$ in the case that there is much difference between the initially assigned $SIR_{target}$ value and the actual $SIR_{target}$ and the case that there is much difference between the $SIR_{target}$ and the actual $SIR_{target}$ due to the variation of moving speed,.

Table 1 shows the nine possible situations which might occur in actual communication together with the adjusting method of $SIR_{target}$ correspondingly. In the table, $SIR_{error-threshold}$ is a judging threshold for triggering special measurement report of node B $SIR_{error}$. When the absolute value of $SIR_{error}$ is greater than the $SIR_{error-threshold}$, node B sends the measurement report and starts the High Priority Outer Loop Power Control.

## Table 1

| $SIR_{error}$ Value$=BLER/BLER_{target}$ | $>SIR_{error\_threshold}$ | $|SIR_{error}|<=SIR_{error\_threshold}$ | $<-SIR_{error\_threshold}$ |
|---|---|---|---|
| Value>1 | ① Upwardly adjust $SIR_{target}$ | ④ Normal Outer Loop Power Control | ⑦ No Outer Loop Power Control |
| 0.1<Value<=1 | ② Upwardly adjust $SIR_{target}$ | ⑤ Normal Outer Loop Power Control | ⑧Downwardly adjust $SIR_{target}$ |
| Value<0.1 | ③ No Outer Loop Power Control | ⑥ Normal Outer Loop Power Control | ⑨Downwardly adjust $SIR_{target}$ |

The 9 situations in table 1 will be described in details as below:

Situation 1: $SIR_{error}$ is greater than $SIR_{error\_threshold}$, and the actually measured BLER cannot meet the $BLER_{target}$, which indicates that the present $SIR_{target}$ cannot meet the requirement of current service. And the $SIR_{target}$ should be adjusted upwardly within the extent of $SIR_{error}$.

Situation 2: $SIR_{error}$ is greater than $SIR_{error\_threshold}$, and the actually measured BLER just meets the $BLER_{target}$, which indicates that the present $SIR_{target}$ should be adjusted upwardly within the extent of $SIR_{error}$.

Situation 3: $SIR_{error}$ is greater than $SIR_{error\_threshold}$, and the actually measured BLER is much less than the $BLER_{target}$, and the communication quality is pretty good, so the Outer Loop Power Control needs not to be carried out; however Inner Loop Power Control is necessary to directly decrease the transmitting power for lower BLER by considering the present actually measured SIR has not been converged to $SIR_{target}$. Even in the situation that the assigned $SIR_{target}$ is much less than the actually measured SIR, it can be transformed to be situation 1 or 2, so as to $SIR_{target}$ is adjusted upwardly.

Situation 4: The absolute value $|SIR_{error}|$ is less than or equal to $SIR_{error-threshold}$, which indicates that the configured $SIR_{target}$ is within the allowance scope, and only normal Outer Loop Power Control is needed at the time. And the situations 5 and 6 are identical with situation 4.

Situation 7: The actually measured SIR is less than $SIR_{target\_are}$ where the difference is equal to or greater than $SIR_{erro\_threshold}$, and the actually measured BLER cannot meet the $BLER_{target}$, and the communication quality is bad. So by considering the present actually measured SIR has not been converged to $SIR_{target}$, the Inner Loop Power Control is necessary to directly increase the transmitting power for lower BLER and the Outer Loop Power Control needs not to be carried out. Even in the situation that the assigned $SIR_{target}$ is much greater than the actually measured SIR, it can be tra nsformed to situation 8 or 9, so as to $SIR_{target}$ is adjusted downwardly.

Situation 8: The actually measured SIR is less than $SIR_{target\_ave}$ where the difference is equal to or greater than $SIR_{error\_threshold}$, and the BLER just meets the $BLER_{target}$. So the $SIR_{target}$ should be adjusted downwardly within the extent of $SIR_{error}$ at this time to meet the requirement, and then normal Outer Loop Power Control is carried out.

Situation 9: The actually measured SIR is less than $SIR_{target\_ave}$ where the difference is equal to or greater than $SIR_{error\_threshold}$, and the actually measured BLER is much less than the $BLER_{target}$, which indicates that the present $SIR_{target}$ is much greater than the required $SIR_{target}$, and the $SIR_{target}$ should be adjusted downwardly within the extent of $SIR_{error}$ so as to increase the capacity of the system, and then normal Outer Loop Power Control is carried out.

In the foregoing 9 situations, $SIR_{error-threshold}$ can be selected to be 1dB. It can be understood that $SIR_{error}$ triggering condition $|SIR_{error}| > SIR_{error\_threshold}$ should be considered while performing Outer Loop Power Control. This triggering condition has the highest priority, i.e., special measurement report information is triggered when the condition is met, and the RNC carries out High Priority Outer Loop Power Control after the information is received.

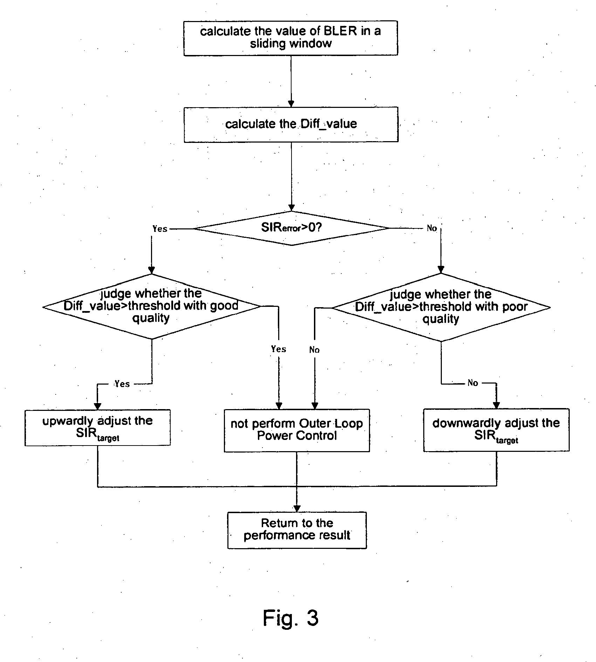

Fig.3 is a flow chart of a High Priority Outer Loop Power Control. Firstly, the BLER in the sliding window with the size of $M \times \dfrac{1}{BLER_{target}}$ and the ratio of the actual BLER to $BLER_{target}$ need to be calculated, which is defined as Diff_Value, Diff_Value=$BLER/BLER_{target}$. Secondly it needs to judge whether the $SIR_{error}$ is greater than 0, and if yes, it means that the measured SIR is much greater than the $SIR_{target}$. And then it needs to judge whether the Diff_Value is greater than the assigned threshold A, which is less than 1, the maximum value in representing good communication quality. It represents the present communication quality can barely meet the communication quality requirements or cannot meet the communication quality requirements when Diff_Value is greater than the threshold A. This is the case that the actual SIR is much greater than the $SIR_{target}$ at this time, so the $SIR_{target}$ needs to be adjusted upwardly, and the adjusting step length is configured as: adjustment coefficient $\times$ $SIR_{error}$. And the adjustment coefficient is determined by the relation between the $SIR_{error}$ and the required adjusting step length in actual measurement, which will not be changed once it is determined. The $SIR_{target}$ is adjusted upwardly, and it needs to return the new $SIR_{target}$, which is the sum of the primary $SIR_{target}$ and the adjusting step length, to node B. It represents that the present communication quality is pretty good when Diff_Value is less than or equal to the threshold A. However, since the actual SIR has not been converged to the $SIR_{target}$, Outer Loop Power Control is not necessary at this time. It needs to wait for the Inner Loop Power Control to adjust the transmitting power and return the sign of not performing Outer Loop Power Control to node B.

It shows that the actually measured SIR is much less than the $SIR_{target}$ if the $SIR_{error}$ is less than 0, it needs to judge whether the Diff_Value is greater than the assigned threshold B, which is greater than 1, the minimum value in representing poor communication quality. It means that the present communication quality is poor when Diff_Value is greater than the threshold. However, since the actual SIR has not been converged to the $SIR_{target}$, Outer Loop Power Control is not necessary at this time, it needs to wait for the Inner Loop Power Control to adjust the transmitting power and return the sign of not performing Outer Loop Power Control to node B. It shows that the present communication quality meets the requirement when Diff_Value is less than or equal to the threshold B, and the $SIR_{target}$ needs to be adjusted downwardly; the adjusting step length is configured as: adjusting coefficient $\times$ $SIR_{error}$, and obtaining a new $SIR_{target}$ by subtracting the adjusting step length from the current $SIR_{target}$, and returning the new $SIR_{target}$ to node B.

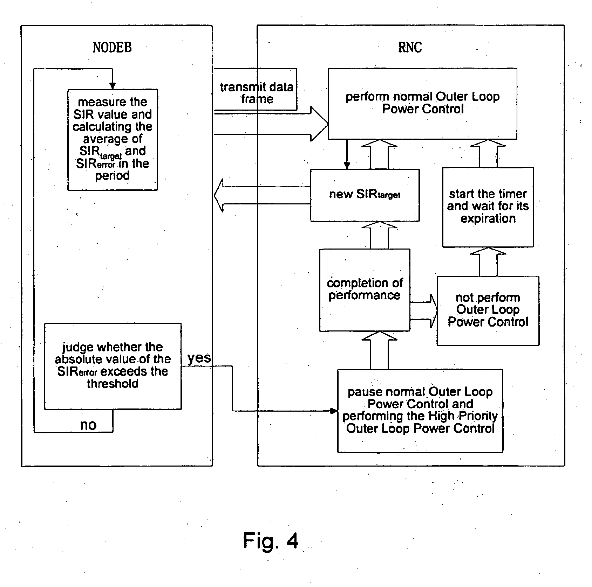

Fig.4 shows a detailed application of the method for employing two-level Outer Loop Power Control of present invention in a WCDMA communication system. In the uplink direction, RNC can send measurement control information to node B and inform node B about the measurement parameters, reporting method, etc. after the establishment of the correspondence context between node B and the user and data transmission are completed. At this moment, node B and RNC carry out the task of its own module respectively. Period measurement will be taken for each received wireless link SIR in node B and periodically calculate the $SIR_{target\_ave}$ by selecting the measurement period of 80ms to obtain $SIR_{error}=SIR-SIR_{target\_ave}$. Afterwards, node B judges whether the absolute value of $SIR_{error}$ exceeds $SIR_{error-threshold}$. If yes, it meets the triggering condition for submitting the measurement report, and node B sends the measurement report to RNC. Otherwise node B keeps on measuring SIR without sending the measurement report to RNC. In RNC, normal Outer Loop Power Control is performed in the beginning. RNC obtains CRCI (CRC Instruction) of each transmission data block from the data frames transmitted by node B so as to count the BLER of each wireless link. Then a new $SIR_{target}$ is gained by Outer Loop Power Control, node B performs Inner Loop Power Control according to the new $SIR_{target}$ from the data frames transmitted by RNC and adjusts the user's transmitting power.

When the triggering condition of $SIR_{error}$ is metmet, node B triggers RNC pause normal Outer Loop Power Control by the measurement report and perform the High Priority Outer Loop Power Control so that the $SIR_{target}$ can be converged to the value meeting the service quality more rapidly. After the accomplishment of the High Priority Outer Loop Power Control, the adjusted $SIR_{target}$ is transmitted to node B by data frames, and normal Outer Loop Power Control is restarted. Normal Outer Loop Power Control will be kept on going as long as there is the correspondence context between node B and the user and data are transmitted in the channel with Closed Loop Power Control. High Priority Outer loop power control will be performed only if the triggering condition is met and exit after the accomplishment. And then corresponding process will be followed in accordance with the sign returned by the High Priority Outer Loop Power Control: the timer is started if the returned sign is to pause Outer Loop Power Control, and normal Outer Loop Power Control is started if the timer expires; normal Outer Loop Power Control is started at once if the returned is a new uplink $SIR_{target}$.

It will be understood that the above embodiments are used only to explain but not to limit the present invention. In despite of the detailed description of the present invention with referring to above preferred embodiments, it should be understood that various modifications, changes or equivalents can be made by those skilled in the art without departing from the spirit and scope of the present invention. All of these modifications, changes or equivalent replacements should be covered in the scope of accompanying claims of the application.

## Claims

1. A method for power controlling in a WCDMA mobile communication system, comprising the steps of: determining user's initial transmitting power and initial uplink $SIR_{target}$ (1); starting Close Loop Power Control including Inner Loop Power Control and performing normal Outer Loop Power Control (3); and measuring SIR of each wireless uplink; **characterized by** further comprising the steps of: judging whether a link $SIR_{error}$ exceeds an error threshold (4), wherein the link $SIR_{error}$ is the difference between an SIR measured at the current time and an average value of the $SIR_{target}$ in a certain period; keeping on the normal Outer Loop Power Control if the $SIR_{error}$ does not exceed the error threshold (9); and if the $SIR_{error}$ exceeds the error threshold, pausing the normal Outer Loop Power Control and triggering a High Priority Outer Loop Power Control for converging the $SIR_{target}$ more rapidly to a value satisfying service quality requirement (5); performing the High Priority Outer Loop Power Control, and returning a performance result; keeping on the normal Outer Loop Power Control after finishing the High Priority Outer Loop Power Control.

2. The method for power controlling in a WCDMA mobile communication system of claim 1, wherein the performance result returned by the High Priority Outer Loop Power Control is either not to perform the Outer Loop Power Control or a new $SIR_{target}$ value (6); if the performance result is not to perform the Outer Loop Power Control, a timer is started to ensure the Inner Loop Power Control has time to converge and when the timer expires the normal Outer Loop Power Control is started (7); if the performance result is a new $SIR_{target}$ value, a shielding period is set during which error blocks will not be counted for the normal Outer Loop Power Control process (8) and the normal Outer Loop Power Control is performed after the shielding period expires (9).

3. The method for power controlling in a WCDMA mobile communication system of claim 1, wherein the normal Outer Loop Power Control adjusts the $SIR_{target}$ in accordance with a threshold report on cyclic check triggering approach, in which it is monitored whether there is a Cyclic Redundancy Check, CRO, error of link transmission data, and the number of error blocks is counted in a predetermined allowance period for error blocks if there is an error; the $SIR_{target}$ is adjusted upwardly to a higher value if the error block number counted in the allowance period for error blocks exceeds an error block threshold; the $SIR_{target}$ is adjusted downwardly to a lower value if no CRC error of link data occurs in a predetermined downward adjusting period.

4. The method for power controlling in a WCDMA mobile communication system of claim 3, further comprising a step of setting a shielding period after adjusting upwardly the $SIR_{target}$ to a higher value, wherein data blocks of CRC error are not counted in the shielding period.

5. The method for power controlling in a WCDMA mobile communication system of claim 4, wherein the shielding period is 4-5 frames.

6. The method for power controlling in a WCDMA mobile communication system of claim 4, wherein the allowance period for error blocks starts from a first data block with the CRC error, which is monitored when the allowance period for error blocks is set as 0; the downward adjusting period is determined according to $BLER_{target}$ of different services, and the downward adjusting period is set as $M \times (1/BLER_{target})$, wherein the $BLER_{target}$ is a target BLER, and M is an adjustable value ranging from 1 to 3.

7. The method for power controlling in a WCDMA mobile communication system of anyone of claims 3-6, wherein the normal Outer Loop Power Control comprises the following steps in details:

step 1, configuring relevant thresholds, including an error block threshold, an allowance period for error blocks, a shielding period and a downward adjusting period;

step 2, judging whether a data transmission time interval expires, and repeating step 2 unless the data transmission time interval expires;

step 3, judging whether there is any data block with CRC error in the data blocks received in the data transmission time interval when it expires, and if there is no error data block, jump to step 14;

step 4, clearing a correct data block counter to 0 if there is any error data block among received blocks;

step 5, judging whether it is within the shielding period currently by judging whether the shielding period is set, not counting the error block number and returning to step 2 if it is within the shielding period currently;

step 6, if it is not within the shielding period currently, counting the number of error blocks received in the data transmission time interval, and adding the number of error blocks received in the data transmission time interval to an error block counter;

step 7, adding a total number of data blocks received in the data transmission time interval to an error block allowance counter;

step 8, judging whether a value of the error block allowance counter is greater than or equal to the allowance period for error blocks, and returning to step 2 if the value is less than the allowance period for error blocks;

step 9, if the value of the error block allowance counter is greater than or equal to the allowance period for error blocks, judging whether a value of the error block counter is greater than or equal to the error block threshold, and returning to step 2 if the value is less than the error block threshold;

step 10, if the value of the error block counter is greater than or equal to the error block threshold, which indicates that the current $SIR_{target}$ should be adjusted upwardly, clearing the error block counter and the error block allowance counter to 0;

step 11, determining an upward adjusting step length and adjusting the $SIR_{target}$ upwardly by adding the adjusting step length to the current $SIR_{target}$ to form a new $SIR_{target}$;

step 12, informing a node B about the new $SIR_{target}$;

step 13, setting the shielding period, and not counting the error block number in the shielding period, and then returning to step 2 when the shielding period expires;

step 14, adding the total number of data blocks received during the data transmission time interval to the correct data block counter;

step 15, judging whether the error block allowance counter is currently 0, and returning to step 7 if it is not 0;

step 16, if the error block allowance counter is currently 0, judging whether the correct data block counter is greater than or equal to the downward adjusting period, and returning to step 2 if it is less than the downward adjusting period;

step 17, clearing the correct data block counter to 0 if it is greater than or equal to the downward adjusting period;

step 18, adjusting the $SIR_{target}$ downwardly according to a step length initially set for downward adjusting, and informing the node B about the new $SIR_{target}$, and then returning to step 2.

8. The method for power controlling in a WCDMA mobile communication system of claim 7, wherein the step length for upward adjusting is determined according to the number of times of continuously adjusting the $SIR_{target}$ upwardly recorded, and the step length determined for upward adjusting is in direct proportion to the number of times of continuously adjusting the $SIR_{target}$ upwardly.

9. The method for power controlling in a WCDMA mobile communication system of claim 7, wherein setting the shielding period is implemented by setting a timer, and the number of error blocks occurring before the timer expires will not be counted.

10. The method for power controlling in a WCDMA mobile communication system of claim 1 or 2, wherein the link $SIR_{error}$ is the difference between the SIR measured at the current time and the average value of the $SIR_{target}$ in the period of 80ms.

11. The method for power controlling in a WCDMA mobile communication system of claim 1 or 2, wherein the error threshold is 1dB.

12. The method for power controlling in a WCDMA mobile communication system of claim 1 or 2, wherein the High Priority Outer Loop Power Control is performed based on the $SIR_{error}$ and a BLER actually measured, and comprises the following steps:

> step 1, calculating the BLER in a sliding window;
> step 2, calculating a Diff_value = BLER/$BLER_{target}$;
> step 3, judging whether the $SIR_{error}$ is greater than 0, and jumping to step 6 if it is less than 0;
> step 4, if the $SIR_{error}$ is greater than 0, judging whether the Diff_value is greater than a set threshold A, and if the Diff_value is greater than the threshold A, configuring an adjusting step length and adjusting the $SIR_{target}$ upwardly, then informing a node B about the adjusted new $SIR_{target}$; ending the High Priority Outer Loop Power Control;
> step 5, if the Diff_value is less than or equal to the threshold A, Outer Loop Power Control is not needed, returning a sign of not performing the Outer Loop Power Control to the node B; and ending the High Priority Outer Loop Power Control;
> step 6, judging if the Diff_value is greater than a set threshold B, and if it is greater than the threshold B, Outer Loop Power Control is not needed; returning a sign of not performing the Outer Loop Power Control to the node B; and ending the High Priority Outer Loop Power Control;
> step 7, if the Diff_value is less than or equal to the threshold B, configuring the adjusting step length and adjusting the $SIR_{target}$ downwardly, and then returning the new $SIR_{target}$ to the node B.

**13.** The method for power controlling in a WCDMA mobile communication system of claim 12, wherein the size of the sliding window is M $\times$ (1/$BLER_{target}$), wherein the $BLER_{target}$ is a target BLER, and M is an adjustable value ranging from 1 to 3.

**14.** The method for power controlling in a WCDMA mobile communication system of claim 12, wherein the threshold A, which is less than 1, is the maximum value for representing good communication quality; the threshold B, which is greater than 1, is the minimum value for representing poor communication quality.

**15.** The method for power controlling in a WCDMA mobile communication system of claim 12, wherein the adjusting step length in the High Priority Outer Loop Power Control equals to adjusting coefficient $\times$ $SIR_{error}$, and the adjusting coefficient is determined by the corresponding relationship between the $SIR_{error}$ and the actually required adjusting step length.

**Patentansprüche**

**1.** Verfahren zur Leistungsregelung in einem mobilen WCDMA-Kommunikationssystem mit den Schritten: Bestimmen der ursprünglichen Sendeleistung des Anwenders und des ursprünglichen Uplinks $SIR_{Sollwert}$ (1) (Signal-zu-Überlagerung-Verhältnis), Starten einer Leistungsregelung, die eine unterlagerte Leistungsregelung umfasst, und Durchführen einer normalen überlagerten Leistungsregelung (3) und Messen des SIR für jeden Funk-Uplink, **dadurch gekennzeichnet, dass** das Verfahren folgende Schritte aufweist: Beurteilen, ob eine Verknüpfung $SIR_{Fehler}$ einen Fehlerschwellenwert (4) überschreitet, wobei die Verknüpfung $SIR_{Fehler}$ die Differenz ist zwischen einem zum aktuellen Zeitpunkt gemessenen SIR und einem Mittelwert des $SIR_{Sollwert}$ in einem bestimmten Zeitabschnitt, Beibehalten der normalen überlagerten Leistungsregelung, wenn das $SIR_{Fehler}$ nicht den Fehlerschwellenwert (9) überschreitet, und wenn das $SIR_{Fehler}$ den Fehlerschwellenwert überschreitet, Aussetzen der normalen überlagerten Leistungsregelung und Triggern einer hochprioritären überlagerten Leistungsregelung, um das $SIR_{Sollwert}$ schneller auf einen Wert zu konvergieren zu lassen, der die Betriebsqualitätsanforderung (5) erfüllt, Ausführen der hochprioritären überlagerten Leistungsregelung, und Rückmelden eines Effizienzergebnisses, Beibehalten der normalen überlagerten Leistungsregelung nach Beendigung der hochprioritären überlagerten Leistungsregelung.

**2.** Verfahren zur Leistungsregelung in einem mobilen WCDMA-Kommunikationssystem gemäß Anspruch 1, wobei das durch die hochprioritäre überlagerte Leistungsregelung rückgeführte Effizienzergebnis entweder darin besteht, die überlagerte Leistungsregelung nicht auszuführen oder in einem neuen $SIR_{Sollwert}$ (6); wenn das Effizienzergebnis darin besteht, die überlagerte Leistungsregelung nicht auszuführen, wird ein Zeitgeber gestartet, um sicherzustellen, dass die unterlagerte Leistungsregelung genügend Zeit hat zu konvergieren, und wenn der Zeitabschnitt abgelaufen ist, wird die normale überlagerte Leistungsregelung gestartet (7); wenn das Effizienzergebnis ein neuer $SIR_{Sollwert}$ ist, wird ein Ausblendzeitraum festgelegt, währenddessen Fehler-Blocks für den normalen überlagerten Leistungsregelungsprozess (8) nicht gezählt werden, und die normale überlagerte Leistungsregelung durchgeführt wird, nachdem der Ausblendungszeitraum (9) abgelaufen ist.

**3.** Verfahren zur Leistungsregelung in einem mobilen WCDMA-Kommunikationssystem gemäß Anspruch 1, wobei die normale überlagerte Leistungsregelung das $SIR_{Sollwert}$ in Übereinstimmung mit einem Schwellenwertreport gemäß einem zyklischen Prüftriggerverfahren anpasst, bei dem überprüft wird, ob es einen Fehler bei einer zyklischen Redundanzprüfung (CRC) von Verbindungsübertragungsdaten gibt, und die Anzahl der Fehlerblöcke in einem vorbestimmten Zulassungszeitabschnitt für Fehlerblöcke gezählt wird, wenn ein Fehler auftritt, wobei das $SIR_{Sollwert}$ aufwärts angepasst wird auf einen höheren Wert, wenn die in dem Zulassungszeitraum für Fehlerblöcke gezählte Anzahl an Fehlerblöcken einen Fehlerblock-Schwellenwert überschreitet, wobei das $SIR_{Sollwert}$ nach unten auf einen niedrigeren Wert angepasst wird, wenn kein CRC-Fehler von Verbindungsdaten in einem vorbestimmten Zeitraum zur Anpassung nach unten auftritt.

**4.** Verfahren zur Leistungsregelung in einem mobilen WCDMA-Kommunikationssystem gemäß Anspruch 3, welches ferner einen Schritt aufweist zum Festlegen eines Ausblendungszeitraums nach dem Nach-Oben-Anpassen des $SIR_{Sollwert}$ auf einen höheren Wert, indem Datenblöcke von CRC-Fehlern in dem Ausblendungszeitraum nicht gezählt werden.

**5.** Verfahren zur Leistungsregelung in einem mobilen WCDMA-Kommunikationssystem gemäß Anspruch 4, wobei der Ausblen-dungszeitraum 4-5 Rahmen beträgt.

**6.** Verfahren zur Leistungsregelung in einem mobilen WCDMA-Kommunikationssystem gemäß Anspruch 4, wobei der Zulassungszeitraum für Fehlerblöcke von einem ersten Datenblock mit dem CRC-Fehler startet, der erfasst wird, wenn der Zulassungszeitraum für Fehlerblöcke auf 0 gesetzt ist, wobei der Nach-Unten-Apassungszeitraum bestimmt wird gemäß einem $BLER_{Sollwert}$ (Blockfehlerhäufigkeits-Sollwert) von verschiedenen Diensten, und der Zeitraum zur Anpassung nach unten festgelegt wird als M x (1/$BLER_{Sollwert}$), wobei der $BLER_{Sollwert}$ ein Sollwert der Blockfehlerhäufigkeit ist, und M ein einstellbarer Wert zwischen 1 und 3 ist.

**7.** Verfahren zur Leistungsregelung in einem mobilen WCDMA-Kommunikationssystem nach einem der Ansprüche 3 bis 6, wobei die normale überlagerte Leistungsregelung im Detail folgende Schritte aufweist:

Schritt 1: Konfigurieren relevanter Schwellenwerte, einschließlich eines Fehlerblock-Schwellenwerts, eines Zulassungszeitabschnitts für Fehlerblöcke, eines Ausblendungszeitraums und eines Zeitraums zur Anpassung nach unten,

Schritt 2: Beurteilen, ob ein Datenübertragungszeitintervall ausläuft und Wiederholen von Schritt 2, außer, wenn das Datenübertragungszeitintervall ausläuft,

Schritt 3: Beurteilen, ob es einen Datenblock mit einem CRC-Fehler in den Datenblöcken gibt, die während des Datenübertragungszeitintervalls empfangen wurden, wenn dieses ausläuft; und wenn es keinen Fehlerdatenblock gibt, Springen zu Schritt 14,

Schritt 4: Auf-Null-Setzen eines Zählers für korrekte Datenblöcke, wenn unter den empfangenen Blöcken kein Fehlerdatenblock ist,

Schritt 5: Beurteilen, ob es sich aktuell innerhalb des Ausblendungszeitraums befindet durch Beurteilen, ob der Ausblendungszeitraum festgelegt ist; die Anzahl der Fehlerblöcke nicht zählen und zu Schritt 2 zurückkehren, wenn das Datenübertragungszeitintervall sich aktuell innerhalb des Ausblendungszeitraums befindet,

Schritt 6: wenn es sich derzeit nicht innerhalb des Ausblendungszeitraums befindet, Zählen der Anzahl von in dem Datenübertragungszeitintervall empfangenen Fehlerblöcken, und Addieren der Anzahl von in dem Datenübertragungszeitintervall empfangenen Fehlerblöcken in einem Fehlerblockzähler,

Schritt 7: Addieren einer Gesamtzahl von in dem Datenübertragungszeitintervall empfangenen Datenblöcken in einem Fehlerblock-Zulassungszähler,

Schritt 8: Beurteilen, ob ein Wert des Fehlerblock-Zulassungszählers größer oder gleich dem Zeitraum der Zulassung für Fehlerblöcke ist, und Zurückkehren zu Schritt 2, wenn der Wert kleiner ist als der Zeitabschnitt der Zulassung von Fehlerblöcken,

Schritt 9: wenn der Wert des Fehlerblock-Zulassungszählers größer oder gleich dem Zulassungszeitraum für Fehlerblöcke ist, Beurteilen, ob ein Wert des Fehlerblockzählers größer oder gleich dem Fehlerblock-Schwellenwert ist, und Zurückkehren zu Schritt 2, wenn der Wert kleiner ist als der Fehlerblock-Schwellenwert,

Schritt 10: wenn der Wert des Fehlerblockzählers größer oder gleich dem Fehlerblock-Schwellenwert ist, was angibt, dass das aktuelle $SIR_{Sollwert}$ nach oben angepasst werden sollte, Auf-Null-Stellen des Fehlerblockzählers und des Fehlerblock-Zulassungszählers auf 0,

Schritt 11: Bestimmen einer Aufwärts-Anpassungs-Schrittlänge und Anpassen des $SIR_{Sollwert}$ nach oben durch Hinzufügen der Anpassungsschrittlänge zu dem aktuellen $SIR_{Sollwert}$, um ein neues $SIR_{Sollwert}$ zu bilden,

Schritt 12: Informieren eines Knotenpunkts B über das neue $SIR_{Sollwert}$,

Schritt 13: Festlegung des Ausblendungszeitabschnitts und Nicht-Zählen der Fehlerblockanzahl in dem Ausblendungszeitraum, und dann Zurückkehren zu Schritt 2, wenn der Ausblendungszeitraum endet,

Schritt 14: Addieren der Gesamtzahl der während des Datenübertragungszeitintervalls empfangenen Datenblöcke in dem Zähler für korrekte Datenblöcke,

Schritt 15: Beurteilen, ob der Datenblock-Zulassungszähler derzeit auf 0 gestellt ist und Zurückkehren zu Schritt 7, wenn dieser nicht auf 0 gestellt ist,

Schritt 16: wenn der Fehlerblock-Zulassungszähler derzeit nicht auf 0 gestellt ist, Beurteilen, ob der Wert des Zählers für korrekte Datenblöcke größer oder gleich dem Zeitraum zum Anpassen nach unten ist, und Zurückkehren zu Schritt 2, wenn dieser kleiner ist als der Zeitraum zur Anpassung nach unten,

Schritt 17: Auf-Null-Stellen des Zählers für korrekte Datenblöcke, wenn dieser Wert größer oder gleich dem Zeitraum zur Anpassung nach unten ist,

Schritt 18: Anpassen des $SIR_{Sollwert}$ nach unten in Übereinstimmung mit einer Schrittlänge, die ursprünglich für das Anpassen nach unten gesetzt wurde, und Informieren des Knotenpunkts B über das neue $SIR_{Sollwert}$, und dann Zurückkehren zu Schritt 2.

8. Verfahren zur Leistungsregelung in einem mobilen WCDMA-Kommunikationssystem gemäß Anspruch 7, wobei die Schrittlänge für die Aufwärts-Anpassung bestimmt wird gemäß der aufgezeichneten Anzahl von kontinuierlichen Anpassungen des $SIR_{Sollwert}$ nach oben, und wobei die für die Anpassung nach oben bestimmte Schrittlänge direkt proportional ist zu der Anzahl der kontinuierlichen Anpassungen des $SIR_{Sollwert}$ nach oben.

9. Verfahren zur Leistungsregelung in einem mobilen WCDMA-Kommunikationssystem gemäß Anspruch 7, wobei das Festlegen des Ausblendungszeitraums durchgeführt wird durch das Stellen eines Zeitgebers, und wobei die Anzahl der Fehlerblöcke, die auftreten, bevor das Zeitintervall endet, nicht gezählt wird.

10. Verfahren zur Leistungsregelung in einem mobilen WCDMA-Kommunikationssystem gemäß Anspruch 1 oder 2, wobei die Verknüpfung $SIR_{Fehler}$ gleich der Differenz ist zwischen dem zur aktuellen Zeit gemessenen SIR und dem Mittelwert des $SIR_{Sollwert}$ in einem Zeitabschnitt von 80 ms.

11. Verfahren zur Leistungsregelung in einem mobilen WCDMA-Kommunikationssystem gemäß Anspruch 1 oder 2, wobei der Fehler-Schwellenwert 1 dB beträgt.

12. Verfahren zur Leistungsregelung in einem mobilen WCDMA-Kommunikationssystem gemäß Anspruch 1 oder 2, wobei die hochprioritäre überlagerte Leistungsregelung durchgeführt wird auf der Grundlage von $SIR_{Fehler}$ und einer BLER (Blockfehlerhäufigkeit), die derzeit gemessen wird, wobei das Verfahren folgende Schritte aufweist:

Schritt 1: Berechnen der BLER in einem gleitenden Fenster,

Schritt 2: Berechnen eines Differenzwertes gleich BLER/$BLER_{Sollwert}$,

Schritt 3: Beurteilen, ob das $SIR_{Fehler}$ größer als 0 ist, und Springen zu Schritt 6, wenn dieses kleiner als 0 ist,

Schritt 4: wenn $SIR_{Fehler}$ größer als 0 ist, Beurteilen, ob der Differenzwert größer als ein gesetzter Schwellenwert A ist, und wenn der Differenzwert größer als der Schwellenwert A ist, Konfigurieren einer Anpassungsschrittlänge und Anpassen des $SIR_{Sollwert}$ nach oben, dann Informieren eines Knotenpunkts B über das angepasste neue $SIR_{Sollwert}$, Beenden der hochprioritären überlagerten Leistungsregelung,

Schritt 5: wenn der Differenzwert kleiner oder gleich dem Schwellenwert A ist, wird die überlagerte Leistungsregelung nicht gebaucht; Zurückführen eines Signals, das das Nicht-Ausführen der überlagerten Leistungsregelung angibt, zum Knotenpunkt B, und Beenden der hochprioritären überlagerten Leistungsregelung,

Schritt 6: Beurteilen, ob der Differenzwert größer ist als ein festgelegter Schwellenwert B, und wenn dieser größer ist als der Schwellenwert B, wird die überlagerte Leistungsregelung nicht gebraucht; Zurückführen eines Signals, das das Nicht-Ausführen der überlagerten Leistungsregelung angibt, zu dem Knotenpunkt B, und Beenden der hochprioritären überlagerten Leistungsregelung,

Schritt 7: wenn der Differenzwert kleiner oder gleich dem Schwellenwert B ist, Konfigurieren der Anpassungsschrittlänge und Anpassen des $SIR_{Sollwert}$ nach unten, und dann Zurückführen des neuen $SIR_{Sollwert}$ zu dem Knotenpunkt B.

13. Verfahren zur Leistungsregelung in einem mobilen WCDMA-Kommunikationssystem gemäß Anspruch 12, wobei die Größe des gleitenden Fensters M x (1/$BLER_{Sollwert}$) ist, wobei die $BLER_{Sollwert}$ ein Sollwert der BLER ist und M ein anpassbarer Wert zwischen 1 und 3 ist.

14. Verfahren zur Leistungsregelung in einem mobilen WCDMA-Kommunikationssystem gemäß Anspruch 12, wobei der Schwellenwert A, der kleiner als 1 ist, der maximale Wert für eine gute Kommunikationsqualität ist, wobei der Schwellenwert B, der größer als 1 ist, der Minimalwert ist, der eine schlechte Kommunikationsqualität angibt.

15. Verfahren zur Leistungsregelung in einem mobilen WCDMA-Kommunikationssystem nach Anspruch 12, wobei die Anpassungsschrittlänge bei der hochprioritären überlagerten Leistungsregelung gleich ist dem Anpassungskoeffizienten multipliziert mit $SIR_{Fehler}$, und wobei der Anpassungskoeffizient bestimmt wird durch das entsprechende Verhältnis zwischen dem $SIR_{Fehler}$ und der aktuell erforderlichen Anpassungsschrittlänge.

**Revendications**

1. Procédé de contrôle de puissance dans un système de communication mobile WCDMA, comprenant les étapes de : détermination d'une puissance initiale de transmission d'utilisateur et d'un $SIR_{target}$ initial en liaison montante (1) ; démarrage d'un contrôle de puissance en boucle fermée incluant un contrôle de puissance en boucle intérieure et exécution d'un contrôle de puissance en boucle extérieure normal (3) ; et mesure d'un SIR de chaque liaison montante sans fil ; **caractérisé en ce que** comprenant en outre les étapes de : jugement si un $SIR_{error}$ de liaison excède un seuil d'erreur (4), dans lequel le $SIR_{error}$ de liaison est la différence entre un SIR mesuré au moment courant et une valeur moyenne du $SIR_{target}$ sur une certaine période ; maintien sur le contrôle de puissance en boucle extérieure normal si le $SIR_{error}$ n'excède pas le seuil d'erreur (9) ; et si le $SIR_{error}$ excède le seuil d'erreur, mise en pause du contrôle de puissance en boucle extérieure normal et déclenchement d'un contrôle de puissance en boucle extérieure haute priorité pour faire converger le $SIR_{target}$ plus rapidement vers une valeur satisfaisant à une exigence de qualité de service (5) ; exécution du contrôle de puissance en boucle extérieure haute priorité, et renvoi d'un résultat d'exécution ; maintien sur le contrôle de puissance en boucle extérieure normal après la fin du contrôle de puissance en boucle extérieure haute priorité.

2. Procédé de contrôle de puissance dans un système de communication mobile WCDMA selon la revendication 1, dans lequel le résultat d'exécution renvoyé par le contrôle de puissance en boucle extérieure haute priorité est soit de ne pas exécuter le contrôle de puissance en boucle extérieure, soit une nouvelle valeur $SIR_{target}$ (6) ; si le résultat d'exécution est de ne pas exécuter le contrôle de puissance en boucle extérieure, un compteur est démarré pour assurer que le contrôle de puissance en boucle intérieure a le temps de converger et lorsque le compteur vient à expiration, le contrôle de puissance en boucle extérieure normal est démarré (7) ; si le résultat d'exécution est une nouvelle valeur $SIR_{target}$, une période de protection est fixée pendant laquelle des blocs erronés ne seront pas comptés pour le processus de contrôle de puissance en boucle extérieure normal (8) et le contrôle de puissance en boucle extérieure normal est exécuté après que la période de protection est venue à expiration (9).

3. Procédé de contrôle de puissance dans un système de communication mobile WCDMA selon la revendication 1, dans lequel le contrôle de puissance en boucle extérieure normal ajuste le $SIR_{target}$ conformément à un rapport de seuil sur une approche par déclenchement de contrôle cyclique, dans lequel il est surveillé s'il y a une erreur de contrôle de redondance cyclique, CRC, de données de transmission de liaison, et le nombre de blocs erronés est compté sur une période de quota prédéterminée pour des blocs erronés s'il y a une erreur ; le $SIR_{target}$ est ajusté vers le haut à une valeur supérieure si le nombre de blocs erronés comptés sur la période de quota pour des blocs erronés excède un seuil de blocs erronés ; le $SIR_{target}$ est ajusté vers le bas à une valeur inférieure si aucune erreur CRC de données de liaison ne survient sur une période d'ajustement vers le bas prédéterminée.

4. Procédé de contrôle de puissance dans un système de communication mobile WCDMA selon la revendication 3, comprenant en outre une étape de fixation d'une période de protection après l'ajustement vers le haut du $SIR_{target}$ à une valeur supérieure, dans lequel des blocs de données d'erreur CRC ne sont pas comptés sur la période de protection.

5. Procédé de contrôle de puissance dans un système de communication mobile WCDMA selon la revendication 4, dans lequel la période de protection est 4 à 5 trames.

6. Procédé de contrôle de puissance dans un système de communication mobile WCDMA selon la revendication 4, dans lequel la période de quota pour des blocs erronés démarre à partir d'un premier bloc de données avec l'erreur CRC, qui est surveillé lorsque la période de quota pour des blocs erronés est fixée comme 0 ; la période d'ajustement vers le bas est déterminée en fonction d'un $BLER_{target}$ de différents services, et la période d'ajustement vers le bas est fixée comme $Mx(1/BLER_{target})$, dans laquelle le $BLER_{target}$ est un BLER cible, et M est une valeur ajustable dans la plage de 1 à 3.

**7.** Procédé de contrôle de puissance dans un système de communication mobile WCDMA selon l'une quelconque des revendications 3 à 6, dans lequel le contrôle de puissance en boucle extérieure normal comprend les étapes suivantes en détails :

étape 1, configuration de seuils pertinents, incluant un seuil de blocs erronés, une période de quota pour des blocs erronés, une période de protection et une période d'ajustement vers le bas ;

étape 2, jugement si un intervalle de temps de transmission de données vient à expiration, et répétition de l'étape 2 sauf si l'intervalle de temps de transmission de données vient à expiration ;

étape 3, jugement s'il y a un quelconque bloc de données avec une erreur CRC dans les blocs de données reçus dans l'intervalle de temps de transmission de données lorsqu'il vient à expiration, et s'il n'y a pas de bloc de données erroné, saut à l'étape 14 ;

étape 4, remise d'un compteur de blocs de données corrects à 0 s'il y a un quelconque bloc de données erroné parmi les blocs reçus ;

étape 5, jugement s'il est couramment dans la période de protection en jugeant si la période de protection est fixée, non comptage du nombre de blocs erronés et retour à l'étape 2 s'il est couramment dans la période de protection ;

étape 6, s'il n'est pas couramment dans la période de protection, comptage du nombre de blocs erronés reçus dans l'intervalle de temps de transmission de données, et ajout du nombre de blocs erronés reçus dans l'intervalle de temps de transmission de données à un compteur de blocs erronés ;

étape 7, ajout d'un nombre total de blocs de données reçus dans l'intervalle de temps de transmission de données à un compteur de quota de blocs erronés ;

étape 8, jugement si une valeur du compteur de quota de blocs erronés est supérieure ou égale à la période de quota pour des blocs erronés, et retour à l'étape 2 si la valeur est inférieure à la période de quota pour des blocs erronés ;

étape 9, si la valeur du compteur de quota de blocs erronés est supérieure ou égale à la période de quota pour des blocs erronés, jugement si une valeur du compteur de blocs erronés est supérieure ou égale au seuil de blocs erronés, et retour à l'étape 2 si la valeur est inférieure au seuil de blocs erronés ;

étape 10, si la valeur du compteur de quota de blocs erronés est supérieure ou égale au seuil de blocs erronés, ce qui indique que le $SIR_{target}$ courant doit être ajusté vers le haut, remise du compteur de blocs erronés et du compteur de quota de blocs erronés à 0 ;

étape 11, détermination d'une longueur d'étape d'ajustement vers le haut et ajustement du $SIR_{target}$ vers le haut en ajoutant la longueur d'étape d'ajustement au $SIR_{target}$ courant pour former un nouveau $SIR_{target}$ ;

étape 12, information d'un noeud B du nouveau $SIR_{target}$ ;

étape 13, fixation de la période de protection, et non comptage du nombre de blocs erronés sur la période de protection, et ensuite retour à l'étape 2 lorsque la période de protection vient à expiration ;

étape 14, ajout du nombre total de blocs de données reçus pendant l'intervalle de temps de transmission de données au compteur de blocs de données corrects ;

étape 15, jugement si le compteur de quota de blocs erronés est couramment 0, et retour à l'étape 7 s'il n'est pas 0 ;

étape 16, si le compteur de quota de blocs erronés est couramment 0, jugement si le compteur de blocs de données corrects est supérieur ou égal à la période d'ajustement vers le bas, et retour à l'étape 2 s'il est inférieur à la période d'ajustement vers le bas ;

étape 17, remise du compteur de blocs de données corrects à 0 s'il est supérieur ou égal à la période d'ajustement vers le bas ;

étape 18, ajustement du $SIR_{target}$ vers le bas conformément à une longueur d'étape initialement fixée pour l'ajustement vers le bas, et information du noeud B quant au nouveau $SIR_{target}$, et ensuite retour à l'étape 2.

**8.** Procédé de contrôle de puissance dans un système de communication mobile WCDMA selon la revendication 7, dans lequel la longueur d'étape pour l'ajustement vers le haut est déterminée en fonction du nombre de fois d'ajustement continu du $SIR_{target}$ vers le haut enregistré, et la longueur d'étape déterminée pour l'ajustement vers le haut est en proportion directe avec le nombre de fois d'ajustement continu du $SIR_{target}$ vers le haut.

**9.** Procédé de contrôle de puissance dans un système de communication mobile WCDMA selon la revendication 7, dans lequel la fixation de la période de protection est mise en oeuvre en fixant un compteur, et le nombre de blocs erronés survenant avant que le compteur ne vienne à expiration ne sera pas compté.

**10.** Procédé de contrôle de puissance dans un système de communication mobile WCDMA selon la revendication 1 ou 2, dans lequel le $SIR_{error}$ de liaison est la différence entre le SIR mesuré au moment courant et la valeur moyenne du $SIR_{target}$ sur la période de 80 ms.

11. Procédé de contrôle de puissance dans un système de communication mobile WCDMA selon la revendication 1 ou 2, dans lequel le seuil d'erreur est 1 dB.

12. Procédé de contrôle de puissance dans un système de communication mobile WCDMA selon la revendication 1 ou 2, dans lequel le contrôle de puissance en boucle extérieure haute priorité est exécuté sur la base du $SIR_{error}$ et d'un BLER effectivement mesuré, et comprend les étapes suivantes :

étape 1, calcul du BLER dans une fenêtre glissante ;
étape 2, calcul d'une valeur Diff = $BLER/BLER_{target}$ ;
étape 3, jugement si le $SIR_{error}$ est supérieur à 0, et saut à l'étape 6 s'il est inférieur à 0 ;
étape 4, si le $SIR_{error}$ est supérieur à 0, jugement si la valeur Diff est supérieure à un seuil A fixé, et si la valeur Diff est supérieure au seuil A, configuration d'une longueur d'étape d'ajustement et ajustement du $SIR_{target}$ vers le haut, puis information d'un noeud B quant au nouveau $SIR_{target}$ ajusté ; fin du contrôle de puissance en boucle extérieure haute priorité ;
étape 5, si la valeur Diff est inférieure ou égale au seuil A, un contrôle de puissance en boucle extérieure n'est pas nécessaire, renvoi d'un signe de ne pas exécuter le contrôle de puissance en boucle extérieure au noeud B ; et fin du contrôle de puissance en boucle extérieure haute priorité ;
étape 6, jugement si la valeur Diff est supérieure à un seuil B fixé, et si elle est supérieure au seuil B, un contrôle de puissance en boucle extérieure n'est pas nécessaire ; renvoi d'un signe de ne pas exécuter le contrôle de puissance en boucle extérieure au noeud B ; et fin du contrôle de puissance en boucle extérieure haute priorité ;
étape 7, si la valeur Diff est inférieure ou égale au seuil B, configuration de la longueur d'étape d'ajustement et ajustement du $SIR_{target}$ vers le bas, et ensuite envoi du nouveau $SIR_{target}$ au noeud B.

13. Procédé de contrôle de puissance dans un système de communication mobile WCDMA selon la revendication 12, dans lequel la taille de la fenêtre glissante est $Mx(1/BLER_{target})$, dans laquelle le $BLER_{target}$ est un BLER cible, et M est une valeur ajustable dans la plage de 1 à 3.

14. Procédé de contrôle de puissance dans un système de communication mobile WCDMA selon la revendication 12, dans lequel le seuil A, qui est inférieur à 1, est la valeur maximum pour représenter une bonne qualité de communication ; le seuil B, qui est supérieur à 1, est la valeur minimum pour représenter une mauvaise qualité de communication.

15. Procédé de contrôle de puissance dans un système de communication mobile WCDMA selon la revendication 12, dans lequel la longueur d'étape d'ajustement dans le contrôle de puissance en boucle extérieure haute priorité est égale à un coefficient d'ajustement x $SIR_{error}$, et le coefficient d'ajustement est déterminé par la relation correspondante entre le $SIR_{error}$ et la longueur d'étape d'ajustement effectivement requise.

1. determine user's initial transmitting power and initial uplink $SIR_{target}$

2. start inner loop power control

3. start normal outer loop power control

9. perform normal outer loop power control

8. set a shielding period

No

4. judge whether the received $SIR_{error}$ exceeds the threshold

No

Yes

5. pause normal Outer Loop Power Control, trigger High Priority Outer Loop Power Control

6. judge whether the returning result of the High Priority Outer Loop Power Control is to perform the Outer Loop Power Control or not

Yes

7. start the timer, and restart normal Outer Loop Power Control when the timer expires

Fig. 1

Fig. 2

calculate the value of BLER in a
sliding window

calculate the Diff_value

$SIR_{error} > 0?$    Yes ← → No

judge whether the
Diff_value>threshold with good
quality

judge whether the
Diff_value>threshold with poor
quality

Yes    No

Yes    No

upwardly adjust the
$SIR_{target}$

not perform Outer Loop
Power Control

downwardly adjust the
$SIR_{target}$

Return to the
performance result

Fig. 3

NODEB

RNC

measure the SIR value and calculating the average of $SIR_{target}$ and $SIR_{error}$ in the period

transmit data frame

perform normal Outer Loop Power Control

new $SIR_{target}$

start the timer and wait for its expiration

completion of performance

not perform Outer Loop Power Control

judge whether the absolute value of the $SIR_{error}$ exceeds the threshold

yes

no

pause normal Outer Loop Power Control and performing the High Priority Outer Loop Power Control

Fig. 4

**EP 1 583 256 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1270459 A

- WO 0065748 A1